# NEUE EUROPÄISCHE PATENTSCHRIFT

(11) **EP 4 147 562 B2**
(45) Veröffentlichungstag und Bekanntmachung des Hinweises auf die Entscheidung über den Einspruch: **20.05.2026**
(45) Hinweis auf die Patenterteilung: 25.10.2023
(21) Anmeldenummer: 22192690.0
(22) Anmeldetag: 29.08.2022
(51) Int. Cl.: A01D 43/08, A01D 75/18, A01F 29/16

(54) **VERFAHREN, STEUERGERÄT UND STEUERUNGSSYSTEM ZUM BETREIBEN EINER LANDWIRTSCHAFTLICHEN ERNTEMASCHINE SOWIE LANDWIRTSCHAFTLICHE ERNTEMASCHINE**
METHOD, CONTROL UNIT AND CONTROL SYSTEM FOR OPERATING AN AGRICULTURAL HARVESTER AND AGRICULTURAL HARVESTER
PROCÉDÉ, APPAREIL DE COMMANDE ET SYSTÈME DE COMMANDE POUR FAIRE FONCTIONNER UNE MOISSONNEUSE AGRICOLE AINSI QUE MOISSONNEUSE AGRICOLE

(30) Priorität: 09.09.2021 DE 102021123418
(43) Veröffentlichungstag der Anmeldung: 15.03.2023
(73) Patentinhaber: CLAAS Saulgau GmbH, 88348 Bad Saulgau (DE)
(72) Erfinder: Frye, Simon, 88348 Bad Saulgau (DE); Stützle, Simon, 88348 Bad Saulgau (DE)

(56) Entgegenhaltungen:
- EP-A1- 3 427 570
- DE-A1- 10 325 252
- DE-A1- 102005 005 736
- DE-A1- 102006 015 152
- DE-A1- 102008 054 488
- DE-A1- 102010 024 818
- DE-A1- 102017 115 465
- DE-A1- 102017 126 413
- DE-B4- 10 100 522

## Beschreibung

Die Erfindung betrifft ein Verfahren, ein Steuergerät, ein Steuerungssystem zum Betreiben einer landwirtschaftlichen Erntemaschine und eine landwirtschaftliche Erntemaschine.

DE 10 2011 014 245 A1 offenbart eine als Feldhäcksler ausgebildete landwirtschaftliche Erntemaschine mit einem Vorsatzgerät, welche als Fremdkörpersensor einen Metalldetektor aufweist. Dann, wenn auf Grundlage des Messsignals des Metalldetektors ein Fremdkörper aus Metall im Erntegut detektiert wird, kann ein Schnellstopp ausgeführt werden, um eine Beschädigung der Arbeitsaggregate der Erntemaschine durch den Fremdkörper zu verhindern.

DE10 2017 115 465 offenbart eine landwirtschaftliche Erntemaschine, insbesondere Feldhäcksler, mit einem Erntevorsatz zum Aufnehmen von Erntegut aus einem Feldbestand, mit einem mindestens eine Einzugswalze aufweisenden Förderaggregat zum Fördern des aufgenommenen Ernteguts, mit einem Verarbeitungsaggregat, dem das Erntegut von dem Förderaggregat zugefördert wird und das das Erntegut verarbeitet, und mit einer Metalldetektionseinrichtung, die mit einer der Einzugswalzen derart gekoppelt ist, dass metallische Fremdkörper im an der Einzugswalze vorbeigeführten Erntegut erfasst werden können.

Der Betrieb einer landwirtschaftlichen Erntemaschine mit einem Fremdkörpersensor kann dadurch beeinträchtigt werden, dass infolge von Störquellen ein vom Fremdkörpersensor bereitgestelltes Messsignal die Detektion des Vorliegens eines Fremdkörpers verursacht, obwohl sich tatsächlich kein Fremdkörper im Erntegut befindet. Dies kann dazu führen, dass die Erntemaschine nicht mehr ordnungsgemäß betrieben werden kann. Solche Störquellen können zum Beispiel durch eine fehlerhafte Reparatur oder fehlerhafte Ersatzteile, die in der Erntemaschine verbaut sind, verursacht werden. Die Fehlersuche nach solchen Störquellen ist zeitaufwendig und erfordert die teilweise Demontage der Erntemaschine. Es besteht Bedarf daran, die Fehlersuche nach solchen Störquellen, welche im Messsignal Signalbestandteile auslösen, die fehlerhafterweise die Detektion des Vorliegens eines Fremdkörpers verursachen, zu vereinfachen.

Hiervon ausgehend liegt der vorliegenden Erfindung die Aufgabe zugrunde, ein neuartiges Verfahren, Steuergerät und Steuerungssystem zum Betreiben einer landwirtschaftlichen Erntemaschine und eine landwirtschaftliche Erntemaschine mit einem solchen Steuerungssystem zu schaffen.

Diese Aufgabe wird durch ein Verfahren zum Betreiben einer landwirtschaftlichen Erntemaschine nach Patentanspruch 1 gelöst.

Ein vom Fremdkörpersensor bereitgestelltes Messsignal wird mit Hilfe eine Signalanalyse derart ausgewertet, dass auf Grundlage der Signalanalyse mindestens ein Bauteil des Arbeitsaggregats ermittelt wird, welches eine Fehlerstelle aufweist, die im Messsignal einen Signalbestandteil auslöst, der fehlerhafterweise die Detektion des Vorliegens eines Fremdkörpers verursacht.

Mithilfe der hier vorliegenden Erfindung wird erstmals vorgeschlagen, dass vom Fremdkörpersensor bereitgestellte Messsignal mit einer Signalanalyse derart auszuwerten, dass über die Signalanalyse mindestens ein Bauteil des Arbeitsaggregats ermittelt wird, welches eine Fehlerstelle und damit Störquelle aufweist, die im Messsignal einen Signalbestandteil auslöst, der fehlerhafterweise die Detektion des Vorliegens eines Fremdkörpers verursacht.

Hierdurch kann die Fehlersuche weitestgehend automatisiert werden, sodass die jeweilige Störquelle innerhalb kurzer Zeit ermittelt und instandgesetzt oder ausgetauscht werden kann.

Als Signalanalyse wird zumindest eine Frequenzanalyse, insbesondere eine Frequenz- und Amplitudenanalyse, genutzt. Es wird eine Frequenz oder eine der Frequenz entsprechende Größe und/oder eine Amplitude oder eine der Amplitude entsprechende Größe und/oder eine Zeitdauer oder eine der Zeitdauer entsprechende Größe des jeweiligen Signalbestandteils ermittelt, wobei auf Basis dieser Größen das mindestens eine Bauteil des Arbeitsaggregats ermittelt wird, welches die Fehlerstelle und damit die Störquelle aufweist, die im Messsignal den jeweiligen Signalbestandteil auslöst, der fehlerhafterweise die Detektion des Vorliegen eines Fremdkörpers verursacht. Diese Vorgehensweise ist besonders bevorzugt. Auf Grundlage der obigen Größen lässt sich das jeweilige Bauteil des Arbeitsaggregats, welches die die Fehldetektion eines Fremdkörpers verursachende Fehlerstelle und damit Störquelle aufweist, einfach zuverlässig ermitteln.

Im Messsignal wird die Frequenz von Signalbestandteilen gleicher Amplitude und/oder gleicher Zeitdauer ermittelt, wobei abhängig von der Frequenz der Signalbestandteile gleicher Amplitude und/oder gleicher Zeitdauer dasjenige Bauteil des Arbeitsaggregats ermittelt wird, welches die jeweilige Fehlerstelle und damit Störquelle aufweist, die im Messsignal den jeweiligen Signalbestandteil auslöst, der fehlerhafterweise die Detektion des Vorliegens eines Fremdkörpers verursacht. Diese Merkmale sind erforderlich, um automatisiert das jeweilige Bauteil des Arbeitsaggregats zu ermitteln, welches die die Fehldetektion eines Fremdkörpers verursachende Fehlerstelle und damit Störquelle aufweist.

Das Steuergerät ist in Patentanspruch 2, das Steuerungssystem ist in Patentanspruch 4 und die landwirtschaftliche Erntemaschine ist in Patentanspruch 6 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine landwirtschaftliche Erntemaschine mit einem erfindungsgemäßen Steuergerät und Steuerungssystem;
- Fig. 2: ein Detail der Fig. 1;
- Fig. 3: ein Zeitdiagramm zur Verdeutlichung der Erfindung;
- Fig. 4: ein weiteres Zeitdiagramm zur Verdeutlichung der Erfindung; und
- Fig. 5: ein weiteres Zeitdiagramm zur Verdeutlichung der Erfindung.

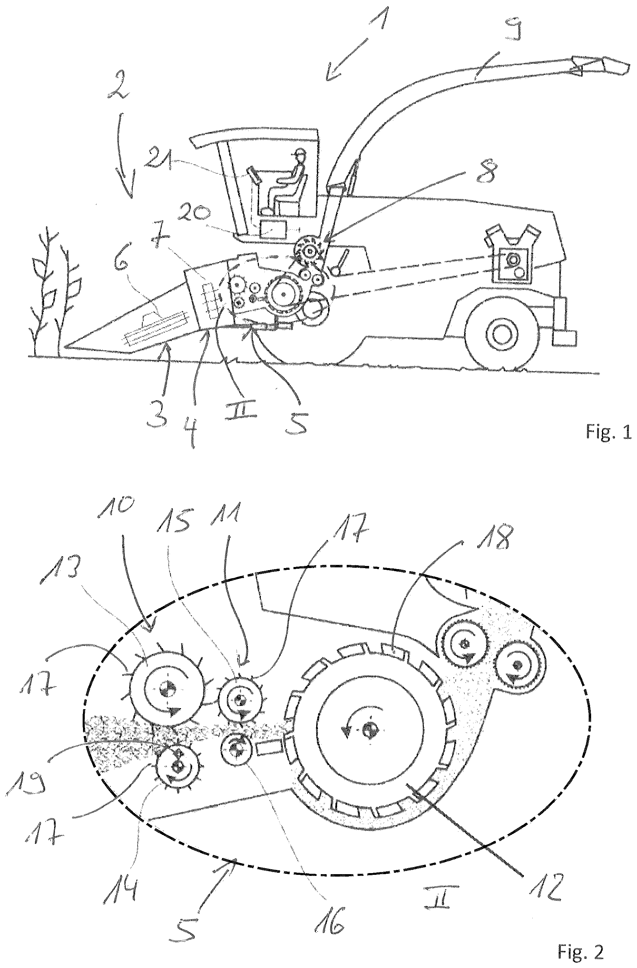

Fig. 1 zeigt eine als Feldhäcksler ausgebildete landwirtschaftliche Erntemaschine 1, die ein Arbeitsaggregat 2 umfasst. Das Arbeitsaggregat 2 verfügt über ein als Maisgebiss ausgebildetes Vorsatzgerät 3, ein Einspeisewerk 4 sowie ein Häckselwerk 5.

Zu erntendes Erntegut wird mithilfe von Mäh- und Förderorganen 6 des Maisgebisses 3 von einem zu bearbeitenden Untergrund abgetrennt und über eine Einspeisetrommel 7 des Einspeisewerks 4 dem Häckselwerk 5 zugeführt.

Im Bereich des Häckselwerks 5 wird das Erntegut zerkleinert und über eine dem Häckselwerk 5 nachgeordnete Fördereinrichtung 8 in Richtung auf einen Auswurfkrümmer 9 gefördert. über den Auswurfkrümmer 9 kann das gehäckselte Erntegut in Richtung auf einen Transportwagen ausgeworfen werden.

Das Häckselwerk 5 verfügt über ein in Transportrichtung des Ernteguts gesehen vorderes Walzenpaar 10 sowie ein hinteres Walzenpaar 11, die beide in Transportrichtung des Ernteguts gesehen vor einer Häckseltrommel 12 des Häckselwerks 5 positioniert sind. Das vordere Walzenpaar 10 umfasst eine Vorpresswalze 13 und eine Transportwalze 14. Das hintere Walzenpaar 11 verfügt über eine Presswalze 15 sowie eine weitere Transportwalze 16, die auch als Glattwalze bezeichnet wird. Die Walzen 13, 14 und 15 der Walzenpaare 10 und 11 tragen Förderleisten 17. Die Häckseltrommel 12 trägt Häckselmesser 18.

Im Arbeitsaggregat 2, im gezeigten Ausführungsbeispiel im Bereich des vorderen Walzenpaars 10 des Häckselwerk 5, ist ein Fremdkörpersensor 19 verbaut, mit welchem auf das Vorliegen eines Fremdkörpers im geernteten Erntegut geschlossen werden kann. Der Fremdkörpersensor 19 ist vorzugsweise in der unteren vorderen Transportwalze 14 angeordnet.

Bei diesem Fremdkörpersensor 19 kann es sich um einen kapazitiven Fremdkörpersensor oder einen induktiven Fremdkörpersensor handeln, vorzugsweise um einen Metalldetektor.

Dann, wenn auf Grundlage des Messsignals des Fremdkörpersensors 19 ein Fremdkörper im Erntegut detektiert wird, kann ein Schnellstopp des Arbeitsaggregats 2 ausgeführt werden. Hierzu übermittelt der Fremdkörpersensor 19 ein Messsignal an ein Steuergerät 20 der landwirtschaftlichen Erntemaschine 1, welche das Messsignal des Fremdkörpersensors 19 auswertet. Abhängig von dieser Auswertung kann in einer Anzeigeeinrichtung 21 einem Fahrer der landwirtschaftlichen Erntemaschine 1 eine entsprechende Warnmeldung angezeigt werden.

Erfindungsgemäß wird das vom Fremdkörpersensor 19 bereitgestellte Messsignal mithilfe einer Signalanalyse ausgewertet, und zwar derart, dass auf Grundlage der Signalanalyse mindestens ein Bauteil des Arbeitsaggregats 2 ermittelt wird, welches eine Fehlerstelle und damit Störquelle aufweist, die im Messsignal einen Signalbestandteil auslöst, der fehlerhafterweise die Detektion der Existenz eines Fremdkörpers verursacht.

So kann zum Beispiel infolge einer fehlerhaften Reparatur oder des Einbaus eines fehlerhaften Ersatzteils für ein Bauteil des Arbeitsaggregats 2 das jeweilige Bauteil eine Störquelle aufweisen, auf die der Fremdkörpersensor 19, der vorzugsweise als Metalldetektor ausgeführt ist, anspricht und dann im Messsignal des Fremdkörpersensors 19 einen jeweiligen Signalbestandteil auslöst, der fehlerhafterweise die Detektion des Vorliegens eines Fremdkörpers verursacht, obwohl tatsächlich kein Fremdkörper im Erntegut vorliegt.

Mit der Erfindung kann die Fehlersuche nach solchen fehlerhaften Bauteilen des Arbeitsaggregats 2 automatisiert und demnach vereinfacht werden, um solche Bauteile auszutauschen und nachfolgend einen störungsfreien Betrieb der landwirtschaftlichen Erntemaschine 1 zu ermöglichen.

Als Signalanalyse wird zumindest eine Frequenzanalyse, vorzugsweise eine Frequenz- und Amplitudenanalyse, genutzt.

Bei der Signalanalyse des Messsignals des Fremdkörpersensors 19 wird eine Frequenz oder eine der Frequenz entsprechende Größe und/oder eine Amplitude oder eine der Amplitude entsprechende Größe und/oder eine Zeitdauer bzw. Signalbreite oder eine der Zeitdauer bzw. Signalbreite entsprechende Größe des jeweiligen Signalbestandteils ermittelt, der im Messsignal des Fremdkörpersensors 19 vorliegt und fehlerhafterweise die Detektion des Vorliegens eines Fremdkörpers verursacht, wobei auf Basis dieser Größen das mindestens eine Bauteil des Arbeitsaggregats 2 ermittelt wird, welches die Fehlerstelle und damit Störquelle aufweist, die im Messsignal den jeweiligen Signalbestandteil auslöst, der fehlerhafterweise die Detektion des Vorliegens eines Fremdkörpers verursacht.

Dabei liegt der Erfindung die Erkenntnis zugrunde, dass sämtliche in der Nähe des Fremdkörpersensors 19 verbauten, rotierenden Bauteile des Arbeitsaggregats 2, insbesondere die Walzen 13, 14, 15 und 16 der Walzenpaare 10 und 11 sowie die Häckseltrommel 12, die Einspeisetrommel 7 und die Mäh- und Förderorgane 6, individuelle Drehzahlen aufweisen, sodass dann, wenn im Bereich dieser Bauteile eine Fehlerstelle vorhanden sein sollte, die im Messsignal einen jeweiligen Signalbestandteil auslöst, der fehlerhafterweise die Detektion des Vorliegens eines Fremdkörpers verursacht, dieser Signalbestandteil über die Frequenz bzw. Periodendauer oder den zeitlichen Abstand der Signalbestandteile zuverlässig dem jeweiligen Bauteil zugeordnet werden kann.

Es kann vorgesehen sein, dass im Messsignal die Frequenz von Signalbestandteilen gleicher Amplitude und/oder gleicher Zeitdauer ermittelt wird, wobei dann abhängig von der Frequenz der Signalbestandteile gleicher Amplitude und/oder gleicher Zeitdauer das Bauteil des Arbeitsaggregats 2 ermittelt wird, welches die jeweilige Fehlerstelle aufweist, die im Messsignal des Fremdkörpersensors 19 den jeweiligen Signalbestandteil auslöst, der fehlerhafterweise die Detektion des Vorliegens eines Fremdkörpers verursacht.

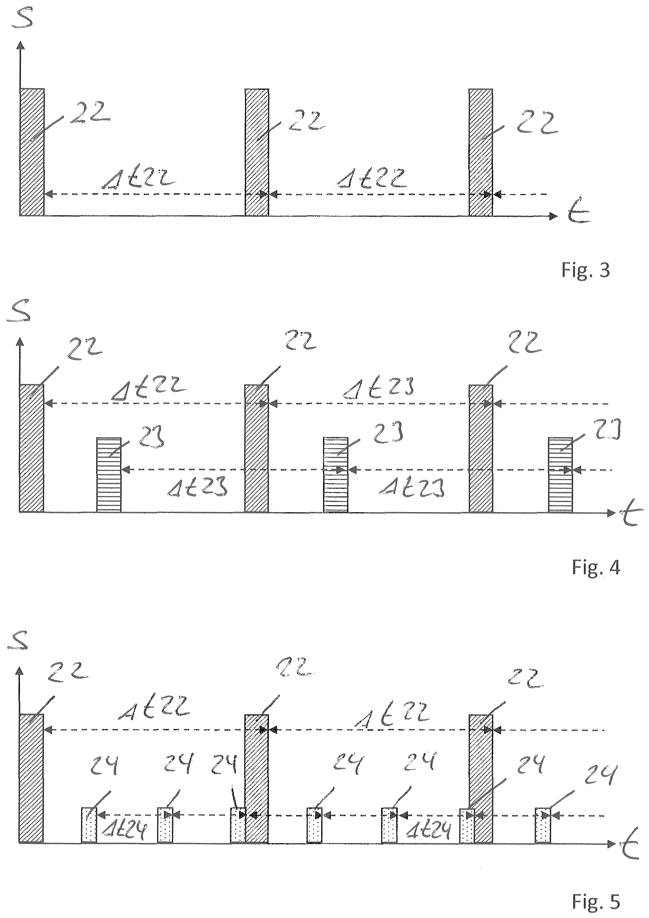

Weitere Details werden nachfolgend unter Bezugnahme auf Fig. 3, 4 und 5 beschrieben, wobei in Fig. 3, 4 und 5 über Zeit t jeweils ein Messsignal S des Fremdkörpersensors 19 gezeigt ist, welches im Steuergerät 20 der oben beschriebenen Signalanalyse unterzogen wird.

In Fig. 3 sind im Messsignal S die Signalbestandteile 22 vorhanden, die eine identische Amplitude sowie identische Signalbreite aufweisen und eine definierte Periodendauer Δt22 aufweisen. Aufgrund der Periodendauer Δt22 bzw. der hiervon abhängigen Frequenz der Signalbestandteile 22 kann dasjenige Bauteil des Arbeitsaggregats 2 ermittelt werden, welche eine Fehlerstelle und damit Störquelle aufweist, die den Signalbestandteil 22 verursacht, der fehlerhafterweise die Detektion des Vorliegens eines Fremdkörpers verursacht. Dies kann aufgrund der definierten Drehzahl der Bauteile des Arbeitsaggregats 2 erfolgen, die sich voneinander unterscheiden.

In Fig. 4 ist ein Signalverlauf des Messsignals S über der Zeit t aufgetragen, welcher neben den Signalbestandteilen 22 weiterhin die Signalbestandteile 23 aufweist, wobei die Amplitude der Signalbestandteile 23 kleiner ist als die Amplitude der Signalbestandteile 22. Sowohl die Signale 22 als auch die Signale 23 verfügen über eine definierte Periodendauer Δt22 bzw. Δt23, wobei in Fig. 4 die Periodendauer Δt22 und Δt23 identisch sind, sodass beide Signalbestandteile 22, 23 dem gleichen Bauteil des Arbeitsaggregats 2 zugeordnet werden können, sodass an diesem Bauteil des Arbeitsaggregats 2 demnach zwei Fehlerstellen und demnach zwei Störquellen vorhanden sind, welche die Detektion des Vorliegens eines Fremdkörpers verursachen.

Im Signalverlauf S der Fig. 5 ist neben dem Signalbestandteil 22 der Signalbestandteil 24 vorhanden, der sich vom Signalbestandteil 22 sowohl hinsichtlich Amplitude als auch Signalbreite sowie Periodendauer unterscheidet. So ist die Periodendauer Δt24 des Signalbestandteils 24 kleiner als die Periodendauer Δt22 des Signalbestandteils 22, sodass die beiden Signalbestandteile 22, 24 unterschiedliche Frequenzen aufweisen und damit unterschiedlichen Bauteilen des Arbeitsaggregats 2 zugeordnet werden. In Fig. 5 wird also auf zwei Bauteile des Arbeitsaggregats 2 geschlossen, die eine Fehlerstelle bzw. Störquelle aufweisen.

Mit der Erfindung kann einfach und zuverlässig das Bauteil eines Arbeitsaggregats 2 einer landwirtschaftlichen Erntemaschine 1 ermittelt werden, welches eine Fehlerstelle und damit Störquelle aufweist, welche das Messsignal eines Fremdkörpersensors 19 beeinträchtigt. Eine solche Fehlerstelle bzw. Störquelle kann durch eine fehlerhafte Reparatur oder den Verbau eines fehlerhaften Ersatzteils verursacht werden, wodurch dann das jeweilige Bauteil einen Restmagnetismus aufweist, welcher das Messsignal des vorzugsweise als Metalldetektor ausgebildeten Fremdkörpersensors 19 beeinflusst und die fehlerhafte Detektion des Vorliegens eines Fremdkörpers verursacht.

Mit der Erfindung ist es möglich, die landwirtschaftliche Erntemaschine 1 einfach innerhalb kurzer Zeit instand zu setzen, indem die ermittelte Fehlerquelle bzw. Störquelle am ermittelten Bauteil beseitigt wird.

Typischerweise ist der Fremdkörpersensor 19 in Querrichtung des Arbeitsaggregats 2 gesehen, die senkrecht zur Ernterichtung der landwirtschaftlichen Erntemaschine 1 und damit Transportrichtung des Ernteguts verläuft, segmentiert, sodass dann nicht nur das Bauteil des Arbeitsaggregats 2 ermittelt werden kann, welches die jeweilige Fehlerstelle bzw. Störquelle aufweist, sondern auch die axiale Position dieser Fehlerstelle bzw. Störquelle in dem ermittelten Bauteil über die Segmentierung des Fremdkörpersensors ermittelt werden kann. Hierdurch lässt sich die räumliche Position der Fehlerstelle bzw. Störquelle weiter automatisiert eingrenzen.

Die Erfindung betrifft weiterhin ein Steuergerät, welches eingerichtet ist, das oben beschriebene Verfahren automatisch auszuführen. So ist das Steuergerät 20 der landwirtschaftlichen Erntemaschine 1 eingerichtet, das vom Fremdkörpersensor 19 bereitgestellte Messsignal mithilfe einer Signalanalyse derart auszuwerten, dass auf Grundlage der Signalanalyse mindestens ein Bauteil des Arbeitsaggregats 2 ermittelt wird, welches eine Fehlerstelle aufweist, die im Messsignal den Signalbestandteil auslöst, der fehlerhafterweise die Detektion des Vorliegens eines Fremdkörpers verursacht. Dies wurde bereits oben im Detail beschrieben.

Ferner betrifft die Erfindung ein Steuerungssystem einer landwirtschaftlichen Erntemaschine, welche das erfindungsgemäße Steuergerät 20 und den Fremdkörpersensor 19 umfasst, wobei der Fremdkörpersensor 19 ein Messsignal an das Steuergerät 20 sendet.

Ferner betrifft die Erfindung eine landwirtschaftliche Erntemaschine 1 mit einem Arbeitsaggregat 2 und einem Steuerungssystem, wie oben beschrieben. Der Fremdkörpersensor 19 kann dabei in einem als Maisgebiss ausgebildeten Vorsatzgerät, im Bereich des Häckselwerks 5, im Bereich eines als Pick-up ausgebildeten Aufnahmeorgans oder dergleichen angeordnet sein. Bei der landwirtschaftlichen Erntemaschine kann es sich um einen Feldhäcksler oder Ladewagen handeln.

### Bezugszeichenliste

- 1: landwirtschaftliche Erntemaschine
- 2: Arbeitsaggregat
- 3: Maisgebiss
- 4: Einspeisewerk
- 5: Häckselwerk
- 6: Mäh- und Förderorgan
- 7: Einspeisetrommel
- 8: Fördereinrichtung
- 9: Auswurfkrümmer
- 10: Walzenpaar
- 11: Walzenpaar
- 12: Häckseltrommel
- 13: Vorpresswalze
- 14: Transportwalze
- 15: Presswalze
- 16: Transportwalze
- 17: Förderleise
- 18: Häckselmesser
- 19: Fremdkörpersensor
- 20: Steuergerät
- 21: Anzeigeeinrichtung
- 22: Signalbestandteil
- 23: Signalbestandteil
- 24: Signalbestandteil

## Patentansprüche

1. Verfahren zum Betreiben einer landwirtschaftlichen Erntemaschine (1), wobei die landwirtschaftliche Erntemaschine (1) ein Arbeitsaggregat (2) aufweist, in welchem ein Fremdkörpersensor (19) verbaut ist, **dadurch gekennzeichnet dass** ein vom Fremdkörpersensor (19) bereitgestelltes Messsignal mit Hilfe eine Signalanalyse derart ausgewertet wird, dass auf Grundlage der Signalanalyse mindestens ein Bauteil des Arbeitsaggregats (2) ermittelt wird, welches eine Fehlerstelle aufweist, die im Messsignal einen Signalbestandteil auslöst, der fehlerhafterweise die Detektion des Vorliegens eines Fremdkörpers verursacht, wobei eine Frequenz oder eine der Frequenz entsprechende Größe und/oder eine Amplitude oder eine der Amplitude entsprechende Größe und/oder eine Zeitdauer oder eine der Zeitdauer entsprechende Größe des jeweiligen Signalbestandteils ermittelt wird, wobei auf Basis dieser Größen das mindestens eine Bauteil des Arbeitsaggregats (2) ermittelt wird, welches die Fehlerstelle aufweist, die im Messsignal den jeweiligen Signalbestandteil auslöst, der fehlerhafterweise die Detektion des Vorliegens eines Fremdkörpers verursacht, und wobei im Messsignal die Frequenz von Signalbestandteilen gleicher Amplitude und/ oder gleicher Zeitdauer ermittelt wird, und dass abhängig von der Frequenz der Signalbestandteile gleicher Amplitude und/oder gleicher Zeitdauer dasjenige Bauteil des Arbeitsaggregats (2) ermittelt wird, welches die jeweilige Fehlerstelle aufweist, die im Messsignal den jeweiligen Signalbestandteil auslöst, der fehlerhafterweise die Detektion des Vorliegens eines Fremdkörpers verursacht.

2. Steuergerät (20) einer landwirtschaftlichen Erntemaschine (1), wobei die landwirtschaftliche Erntemaschine ein Arbeitsaggregat (2) aufweist, in welchem ein Fremdkörpersensor (19) verbaut ist, **dadurch gekennzeichnet dass** das Steuergerät (20) eingerichtet ist, ein vom Fremdkörpersensor (19) bereitgestelltes Messsignal mit Hilfe einer Signalanalyse derart auszuwerten, dass auf Grundlage der Signalanalyse mindestens ein Bauteil des Arbeitsaggregats (2) ermittelt wird, welches eine Fehlerstelle aufweist, die im Messsignal einen Signalbestandteil auslöst, der fehlerhafterweise die Detektion des Vorliegens eines Fremdkörpers verursacht, wobei eine Frequenz oder eine der Frequenz entsprechende Größe und/oder eine Amplitude oder eine der Amplitude entsprechende Größe und/oder eine Zeitdauer oder eine der Zeitdauer entsprechende Größe des jeweiligen Signalbestandteils ermittelt wird, wobei auf Basis dieser Größen das mindestens eine Bauteil des Arbeitsaggregats (2) ermittelt wird, welches die Fehlerstelle aufweist, die im Messsignal den jeweiligen Signalbestandteil auslöst, der fehlerhafterweise die Detektion des Vorliegens eines Fremdkörpers verursacht, und wobei im Messsignal die Frequenz von Signalbestandteilen gleicher Amplitude und/ oder gleicher Zeitdauer ermittelt wird, und dass abhängig von der Frequenz der Signalbestandteile gleicher Amplitude und/oder gleicher Zeitdauer dasjenige Bauteil des Arbeitsaggregats (2) ermittelt wird, welches die jeweilige Fehlerstelle aufweist, die im Messsignal den jeweiligen Signalbestandteil auslöst, der fehlerhafterweise die Detektion des Vorliegens eines Fremdkörpers verursacht.

3. Steuergerät (20) nach Anspruch 2, **dadurch gekennzeichnet, dass** das Steuergerät eingerichtet ist, das Verfahren nach Anspruch 1 automatisch auszuführen.

4. Steuerungssystem einer landwirtschaftlichen Erntemaschine, mit einem Steuergerät (20) nach Anspruch 2 oder 3, mit mindestens einem in einem Arbeitsaggregat (2) der landwirtschaftlichen Erntemaschine (1) verbauten Fremdkörpersensor (19), der ein Messsignal an das Steuergerät (20) sendet.

5. Steuerungssystem nach Anspruch 4, **dadurch gekennzeichnet, dass** der Fremdkörpersensor (19) als induktiver oder kapazitiver Sensor, insbesondere als Metalldetektor, ausgebildet ist.

6. Landwirtschaftliche Erntemaschine (1), mit einem Arbeitsaggregat (2), und mit einem Steuerungssystem nach Anspruch 4 oder 5.

7. Landwirtschaftliche Erntemaschine (1) nach Anspruch 6, wobei der Fremdkörpersensor (19) in einem als Maisgebiss (3) oder in einem Häckselwerk (5) des Arbeitsaggregats (2) eines Feldhäckslers verbaut ist.

8. Landwirtschaftliche Erntemaschine (1) nach Anspruch 6, wobei der Fremdkörpersensor (19) in einem als Pickup ausgebildeten Aufnahmeorgan des Arbeitsaggregats (2) eines Feldhäckslers oder eines Ladewagens verbaut ist.

## Claims

1. Method for operating an agricultural harvesting machine (1), wherein the agricultural harvesting machine (1) has a working assembly (2) in which a foreign body sensor (19) is installed, **characterized in that** a measurement signal provided by the foreign body sensor (19) is evaluated with the aid of a signal analysis in such a manner that the signal analysis is taken as a basis for determining at least one component of the working assembly (2) which has a fault which triggers, in the measurement signal, a signal component which incorrectly causes the presence of a foreign body to be detected, wherein a frequency or a variable corresponding to the frequency and/or an amplitude or a variable corresponding to the amplitude and/or a duration or a variable corresponding to the duration of the respective signal component is/are determined, wherein these variables are taken as a basis for determining the at least one component of the working assembly (2) which has the fault which triggers, in the measurement signal, the respective signal component which incorrectly causes the presence of a foreign body to be detected, and wherein the frequency of signal components of identical amplitude and/or identical duration is determined in the measurement signal, and the frequency of the signal components of identical amplitude and/or identical duration is taken as a basis for determining that component of the working assembly (2) which has the respective fault which triggers, in the measurement signal, the respective signal component which incorrectly causes the presence of a foreign body to be detected.

2. Control device (20) of an agricultural harvesting machine (1), wherein the agricultural harvesting machine has a working assembly (2) in which a foreign body sensor (19) is installed, **characterized in that** the control device (20) is configured to evaluate a measurement signal provided by the foreign body sensor (19) with the aid of a signal analysis in such a manner that the signal analysis is taken as a basis for determining at least one component of the working assembly (2) which has a fault which triggers, in the measurement signal, a signal component which incorrectly causes the presence of a foreign body to be detected, wherein a frequency or a variable corresponding to the frequency and/or an amplitude or a variable corresponding to the amplitude and/or a duration or a variable corresponding to the duration of the respective signal component is/are determined, wherein these variables are taken as a basis for determining the at least one component of the working assembly (2) which has the fault which triggers, in the measurement signal, the respective signal component which incorrectly causes the presence of a foreign body to be detected, and wherein the frequency of signal components of identical amplitude and/or identical duration is determined in the measurement signal, and the frequency of the signal components of identical amplitude and/or identical duration is taken as a basis for determining that component of the working assembly (2) which has the respective fault which triggers, in the measurement signal, the respective signal component which incorrectly causes the presence of a foreign body to be detected.

3. Control device (20) according to Claim 2, **characterized in that** the control device is configured to automatically carry out the method according to Claim 1.

4. Control system of an agricultural harvesting machine,
having a control device (20) according to Claim 2 or 3,
having at least one foreign body sensor (19) which is installed in a working assembly (2) of the agricultural harvesting machine (1) and transmits a measurement signal to the control device (20).

5. Control system according to Claim 4, **characterized in that** the foreign body sensor (19) is in the form of an inductive or capacitive sensor, in particular a metal detector.

6. Agricultural harvesting machine (1) having a working assembly (2) and having a control system according to Claim 4 or 5.

7. Agricultural harvesting machine (1) according to Claim 6, wherein the foreign body sensor (19) is installed in a in the form of a corn header (3) or in a chopping unit (5) of the working assembly (2) of a field chopper.

8. Agricultural harvesting machine (1) according to Claim 6, wherein the foreign body sensor (19) is installed in a receiving member of the working assembly (2) of a field chopper or of a loading wagon, which receiving member is in the form of a pickup.

## Revendications

1. Procédé permettant de faire fonctionner une moissonneuse agricole (1), la moissonneuse agricole (1) présentant un organe de travail (2) dans lequel est installé un capteur de corps étranger (19), **caractérisé en ce qu'**un signal de mesure fourni par le capteur de corps étranger (19) est évalué à l'aide d'une analyse de signal de telle sorte que sur la base de l'analyse de signal, au moins un composant de l'organe de travail (2) est déterminé qui présente un endroit défectueux qui déclenche dans le signal de mesure une composante de signal qui provoque de manière erronée la détection de la présence d'un corps étranger, dans lequel une fréquence ou une grandeur correspondant à la fréquence et/ou une amplitude ou une grandeur correspondant à l'amplitude et/ou une durée ou une grandeur correspondant à la durée de la composante de signal respective sont déterminées, dans lequel, sur la base de ces grandeurs, ledit au moins un composant de l'organe de travail (2) est déterminé qui présente l'endroit défectueux qui déclenche dans le signal de mesure la composante de signal respective qui provoque de manière erronée la détection de la présence d'un corps étranger, et dans lequel la fréquence des composantes de signal d'amplitude identique et/ou de durée identique est déterminée dans le signal de mesure, et **en ce qu'**en fonction de la fréquence des composantes de signal d'amplitude identique et/ou de durée identique, celui des composants de l'organe de travail (2) est déterminé qui présente l'endroit défectueux respectif qui déclenche dans le signal de mesure la composante de signal respective qui provoque de manière erronée la détection de la présence d'un corps étranger.

2. Appareil de commande (20) d'une moissonneuse agricole (1), la moissonneuse agricole présentant un organe de travail (2) dans lequel est installé un capteur de corps étranger (19), **caractérisé en ce que** l'appareil de commande (20) est conçu pour évaluer un signal de mesure fourni par le capteur de corps étranger (19) à l'aide d'une analyse de signal de telle sorte que sur la base de l'analyse de signal, au moins un composant de l'organe de travail (2) est déterminé qui présente un endroit défectueux qui déclenche dans le signal de mesure une composante de signal qui provoque de manière erronée la détection de la présence d'un corps étranger, dans lequel une fréquence ou une grandeur correspondant à la fréquence et/ou une amplitude ou une grandeur correspondant à l'amplitude et/ou une durée ou une grandeur correspondant à la durée de la composante de signal respective sont déterminées, dans lequel, sur la base de ces grandeurs, ledit au moins un composant de l'organe de travail (2) est déterminé qui présente l'endroit défectueux qui déclenche dans le signal de mesure la composante de signal respective qui provoque de manière erronée la détection de la présence d'un corps étranger, et dans lequel la fréquence des composantes de signal d'amplitude identique et/ou de durée identique est déterminée dans le signal de mesure, et **en ce qu'**en fonction de la fréquence des composantes de signal d'amplitude identique et/ou de durée identique, celui des composants de l'organe de travail (2) est déterminé qui présente l'endroit défectueux respectif qui déclenche dans le signal de mesure la composante de signal respective qui provoque de manière erronée la détection de la présence d'un corps étranger.

3. Appareil de commande (20) selon la revendication 2, **caractérisé en ce que** l'appareil de commande est conçu pour exécuter automatiquement le procédé selon la revendication 1.

4. Système de commande d'une moissonneuse agricole, comprenant un appareil de commande (20) selon la revendication 2 ou 3, comprenant au moins un capteur de corps étranger (19) installé dans un organe de travail (2) de la moissonneuse agricole (1) et qui envoie un signal de mesure à l'appareil de commande (20).

5. Système de commande selon la revendication 4, **caractérisé en ce que** le capteur de corps étranger (19) est réalisé sous forme de capteur inductif ou capacitif, en particulier de détecteur de métaux.

6. Moissonneuse agricole (1), comprenant un organe de travail (2) et un système de commande selon la revendication 4 ou 5.

7. Moissonneuse agricole (1) selon la revendication 6, dans laquelle le capteur de corps étranger (19) est installé dans un sous forme de bec cueilleur de maïs (3) ou dans un mécanisme hacheur (5) de l'organe de travail (2) d'une ramasseuse-hacheuse.

8. Moissonneuse agricole (1) selon la revendication 6, dans laquelle le capteur de corps étranger (19) est installé dans un élément de ramassage, réalisé sous forme de dispositif de ramassage, de l'organe de travail (2) d'une ramasseuse-hacheuse ou d'une remorque autochargeuse.
